# EUROPEAN PATENT SPECIFICATION

(11) **EP 1 313 934 B1**
(45) Date of publication and mention of the grant of the patent: **18.10.2006**
(21) Application number: 01960968.4
(22) Date of filing: 28.08.2001
(51) Int. Cl.: F01N 3/08

(54) **EXHAUST SYSTEM FOR LEAN-BURN ENGINES**
ABGASSYSTEM FÜR BRENNKRAFTMASCHINEN MIT MAGERGEMISCHVERBRENNUNG
SYSTEME D'ECHAPPEMENT POUR MOTEURS A MELANGE PAUVRE

(30) Priority: 29.08.2000 GB 0021118
(43) Date of publication of application: 28.05.2003
(73) Proprietor: JOHNSON MATTHEY PUBLIC LIMITED COMPANY, London SW1Y 5BQ (GB)
(72) Inventor: BRISLEY, Robert, James, Cambridge CB2 4RB (GB); SWALLOW, Daniel, Royston, Herts SG8 9BL (GB); TWIGG, Martyn, Vincent, Cambridge CB3 8PQ (GB)
(74) Representative: Nunn, Andrew Dominic
(86) International application number: PCT/GB2001/003840
(87) International publication number: WO 2002/018753

(56) References cited:
- EP-A- 0 747 581
- EP-A- 0 758 713
- EP-A- 0 893 154
- EP-A- 1 008 379
- EP-A- 1 033 161
- DE-A- 19 636 041
- DE-A- 19 941 439
- US-A- 5 771 685
- HECK R.M.; FARRAUTO R.J.: 'Catalytic Air Pollution Control Commercial Technology', 1995, ENGELHARD CORPORATION, NEW YORK

## Description

The present invention relates to a lean burn gasoline engine comprising an exhaust system and in particular to a lean burn gasoline engine wherein the exhaust system comprises a NOx-trap.

Manufacturers are increasingly interested in engines which operate under lean-running conditions to power their vehicles. One reason for this is because lean-burn engines produce less CO₂. This is advantageous because future emission legislation aims to reduce CO₂, but the consumer also benefits from the increased fuel economy.

One form of lean-burn engine is a gasoline direct injection engine, which is designed to operate under stoichiometric and lean conditions. When running lean, relatively low levels of nitrogen oxides (NOx) are formed that cannot be reduced (removed) in the presence of the relatively high levels of oxygen present. As a result NOx is stored in a ''NOx-trap", e.g. as nitrate, when running lean. Periodically the exhaust gas is enriched, and excess reductant, e.g. unburnt hydrocarbon (HC), reduces stored NOx to nitrogen. When running lean the exhaust gas contains relatively high levels of unburnt HC.

A system presently proposed for treating emissions from future gasoline direct injection engines comprises a close-coupled three-way catalyst (TWC) and an underfloor NOx-trap. The NOx-trap is positioned underfloor because, in order to be able to store NOx thermodynamically, it has to be below about 550°C. The primary role of the TWC is to control emissions under stoichiometric conditions. It should reach light-off temperature relatively rapidly so as to reduce cold-start emissions.

The main problem with the proposed system is its ability to deal with the relatively high levels of HC when running lean. The TWC is not designed to do this, nor is the NOx-trap. Meeting future legislation requirements for lean-burn engines in general, and lean-burn gasoline engines in particular, is difficult for HC.

US patent no. 5,771,685 discloses an exhaust system for a lean burn gasoline engine comprising a three-way catalyst followed by a NOx-trap. The exhaust system includes two heated exhaust gas oxygen sensors, one located upstream of the NOx-trap, the other downstream of the NOx-trap, for on-board monitoring of NOx-trap performance.

We have now found that, very surprisingly, HC aftertreatment can be improved for lean-burn engines if an oxidation catalyst is included in the exhaust system upstream of a NOx-trap.

According to one aspect, the invention provides a lean-burn gasoline engine comprising an exhaust system, which system comprising an oxidation catalyst containing a platinum group metal (PGM), for oxidising engine-derived unburnt hydrocarbon (HC) to H₂O and CO₂ during normal λ > 1 running conditions disposed upstream of a NOx-trap, wherein the only PGM in the oxidation catalyst is platinum.

By "lean-burn gasoline engine" herein, we mean an engine which is controlled so that during at least part of its normal operation it runs on a lean of stoichiometric air-to-fuel ratio, i.e. where λ > 1. Lean-burn gasoline engines as defined herein include partial lean-burn gasoline engines using a variety of injectors including those with air assisted direct injection and high-pressure direct injection.

An oxidation catalyst is purposely designed to provide for the reaction of gaseous components with oxygen, typically in as wide a temperature range as possible, especially lower temperatures. The catalyst oxidises whenever oxygen is available for reaction in the gas stream. Active components of an oxidation catalyst can include platinum, palladium or a base metal active for oxidation such as copper, molybdenum, cobalt or any other transition element that is active for oxidation.

A TWC is purposely designed to oxidise HC and carbon monoxide and at the same time to reduce NOx. Whilst an oxygen storage component (OSC) can be included to extend the operating window of the TWC, the TWC is designed to operate at or close to an air-to-fuel ratio of λ = 1. Typical TWC active components are platinum and/or palladium for oxidation and rhodium for reduction. The OSC can be ceria based.

GB-A-2342056 describes a catalytic converter for an internal combustion engine such as a gasoline direct injection engine including a NOx-trap having on an upstream portion an OSC. The OSC absorbs oxygen during lean-running and releases it during rich regeneration of the NOx-trap, the excess oxygen being used to oxidise HC and thereby increase the exotherm over the NOx-trap to enable more efficient desorption and reduction of NOx. Ceria-based OSC are not oxidation catalysts for HC under lean-running conditions.

A NOx-trap is purposely designed for absorbing and storing NOx during lean conditions, and releasing and catalytically reducing the stored NOx during rich conditions. This requires controlling the engine so that periodically it is run rich during lean operation. A NOx-trap typically includes active materials for three functions: an oxidation catalyst, such as platinum; an absorber, for example an alkali metal or an alkaline earth compound typified by barium carbonate; and a reduction catalyst, such as rhodium.

EP 0893144 describes a method and device for desulphating a NOx-trap in direct injection diesel engines. In one embodiment, an exotherm is generated over an upstream oxidation catalyst to heat the NOx-trap to a temperature sufficient to desorb the SOx under λ > 1 condition. This is done by injecting additional HC and/or throttling the engine and retarding fuel injection while maintaining λ > 1 condition. Alternatively, under λ < 1 condition SOₓ is removed by generating, an almost oxygen-free exhaust stream with a CO content of between 1 - 10% by including a component in an oxidation catalyst upstream of the NOx-trap which promotes the water-gas shift.

Apart from the obvious advantage of reducing tailpipe-out HC levels, we have also found that in the embodiment in which the oxidation catalyst is upstream of the NOx-trap, the oxidation catalyst enables the NOx-trap to work more efficiently. Thus for the same volume occupied by the NOx-trap substrate in the proposed aftertreatment system for gasoline direct injection described above, the combination of upstream oxidation catalyst and downstream NOx-trap of the invention provides a similar NOx-trap activity, but also enables the system to treat relatively high levels of HC. Put another way, the total cost of the platinum group metals between the NOx-trap only and the oxidation catalyst/NOx-trap of the invention is equivalent

Although we do not wish to be bound by theory, we believe this phenomenon is brought about by the upstream oxidation catalyst promoting the reaction of NO with oxygen to produce NO₂, a function which is also performed by the oxidation catalyst component in the NOx-trap.

Therefore, among the advantages of the present invention during lean-running of a lean burn gasoline engine are: reduced HC emissions; reduced CO emissions; oxidation of NO → NO₂; and removal of HC, which also provides efficiency of the NOx-trap (in addition to the other three advantages mentioned above).

In addition to the exhaust system of the invention, another oxidation catalyst can be located downstream of the NOx-trap. This catalyst can treat HC slip past the upstream oxidation catalyst and NOx-trap.

Advantageously, the oxidation catalyst is also an HC-trap. The HC-trap can include a zeolite, such as γ-type zeolites, ZSM-5 type zeolite and US-γ type zeolite, mordernite, β-zeolite, ZSM5. Where the HC-trap includes a zeolite it can be mixed with alumina, preferably platinum on alumina, silica-alumina, titania and/or zirconia. This embodiment is particularly useful in controlling HC immediately after start-up in that HC can be absorbed and then released when the HC-trap heats up. The released HC can then be oxidised downstream because, by the time the HC is released, the oxidation catalyst should have reached its light-off temperature. For further information on combining the temperature windows of HC-trap and a downstream catalyst, see EP-A-0830201.

The oxidation catalyst for use in the present invention contains platinum group metal (PGM), but the only PGM is platinum. Base metals or mixtures of any two or more thereof which are active for oxidation can also be used in combination with the platinum. Base metals active for oxidation include copper, nickel, molybdenum and cobalt, but any other active transition element can be used as appropriate.

In preferred embodiments, the exhaust system of the engine according to the invention also includes a close-coupled three-way catalyst. In further preferred embodiments, the system includes a SOx-trap upstream of the oxidation catalyst, but preferably, where present, downstream of the close-coupled three-way catalyst. Active materials for inclusion in compositions for SOx-traps include an alkaline earth metal compounds or an alkali metal compound or mixtures of any two or more thereof. Sulphur poisoning of catalyst materials is a known problem, and it is preferable to avoid SOx contacting the NOx-trap in the system, unless the conditions are such (high temperatures/rich, reducing conditions) that SOx is not absorbed to any of the catalytic materials of the exhaust system. SOx-trap regeneration can be effected by periodically visiting these conditions and this can be effected under the control of the engine control unit (ECU). As levels of sulphur in fuel are reduced, it may not always be necessary to include a SOx-trap in the system. For further details on SOx-traps, reference can be made to our EP-A-0814242.

In a further preferred embodiment, the exhaust system of the engine according to the invention includes a clean-up catalyst downstream of the NOx-trap. This is particularly useful in systems including the SOx-trap wherein when the SOx-trap is regenerated H₂S can be produced, which has an unpleasant smell. In order to combat this, the clean-up catalyst comprises an oxygen storage element such as ceria, an oxidation component, such as platinum, a NOx reducing component, for example rhodium, and a component for suppressing H₂S, for example NiO, Fe₂O₃, MnO₂, CoO and CrO₂. As previously mentioned, in an alternative embodiment, the clean-up catalyst can also be configured so as to contend with HC slip past the oxidation catalyst of the invention, which can occur where there is insufficient oxygen in the gas stream to oxidise the HC to H₂O and CO₂. In this embodiment, the clean-up catalyst includes an oxygen storage component with catalytic activity, such as ceria.

The oxidation catalyst and the NOx-trap can each be provided on a separate substrate such as a flow-through honeycomb monolith. The monolith can be metal or ceramic; where ceramic it can be cordierite, although alumina, mullite, silicon carbide, zirconia or sodium/zirconia/phosphate are alternatives. In a particularly preferred embodiment the NOx-trap and the oxidation catalyst are provided on a single substrate or "brick", each occupying a distinct zone. Manufacture of coated substrates can be carried out by methods known to the person skilled in the art and no further explanation will be given here. Preferably the NOx-trap and the oxidation catalyst substrate(s) are in one shell or can.

According to a further aspect, the invention provides a vehicle including a lean-burn gasoline engine according to the invention.

The engine can be a gasoline direct injection (GDI) engine.

Preferred exhaust systems for a lean-burn gasoline engine include a close-coupled TWC upstream of the oxidation, catalyst.

The exhaust system of the engine according to the invention can also include a SOx-trap upstream of the NOx-trap (downstream of the TWC, where prescnt); and a clean-up catalyst downstream of the NOx-trap.

Further preferred embodiments of the present invention are described in the specific description below with reference to the accompanying drawings.

The oxidation catalyst and the NOx-trap are preferably positioned in the underfloor position of a vehicle.

According to a further aspect, the invention provides a method of treating NOx and reducing the amount of engine-derived unburnt HC emitted to the atmosphere from a lean-burn gasoline engine during normal λ > 1 running conditions, which method comprises oxidising the HC to CO₂ and to H₂O by passing lean exhaust gases from the engine containing the HC over an oxidation catalyst containing a PGM and then passing the exhaust gases over a NOx-trap, wherein the only PGM in the oxidation catalyst is platinum.

In order that the invention may be more fully understood, preferred embodiments of systems for use in the engine according to the invention will now be described with reference to the accompanying drawings, in which:
Figure 1 is a schematic diagram of a prior art exhaust system proposed for use with GDI engines;
Figure 2 is a schematic diagram of an exhaust system provided for the purposes of comparison in the Example below;
Figure 3 is a schematic diagram showing an exhaust system embodying the basic concept of the present invention for use in lean-burn gasoline engines;
Figure 4 is a schematic diagram showing an alternative embodiment of the exhaust system shown in, Figure 3;
Figure 5 is a schematic diagram showing an embodiment of the exhaust system of the invention including a three-way catalyst;
Figure 6 is a schematic diagram showing an embodiment of the exhaust system of the invention including a SOx-trap;
Figure 7 is a schematic diagram showing an embodiment of the exhaust system of the invention including a clean-up catalyst;
Figure 8 is a schematic diagram showing an embodiment of the exhaust system of the invention including a three-way catalyst and a SOx-trap; and
Figure 9 is a schematic diagram showing an embodiment of the exhaust system of the invention for including a three-way catalyst, a SOx-trap and a clean-up catalyst.

Referring to the Figures: 1 is an oxidation catalyst according to the invention; 2 is a NOx-trap; 3 is a three-way catalyst; 4 is a SOx-trap; 5 is a clean-up catalyst; U is an upstream end of the exhaust system; and D is a downstream end of the exhaust system.

We believe that the Figures are self explanatory, and the following explanation is provided to enhance the understanding of certain embodiments shown therein.

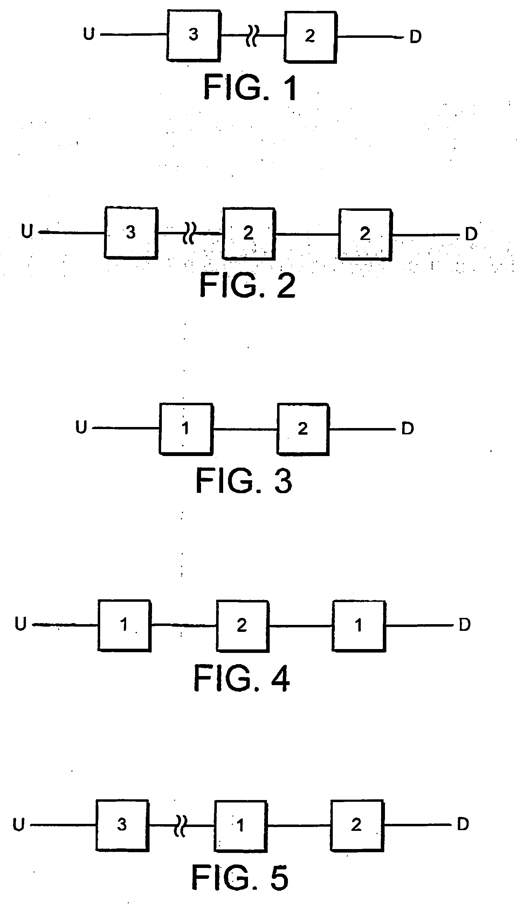

In each of Figures 3 to 10, the oxidation catalyst according to the invention is preferably a HC-trap. The HC-trap preferably includes a zeolite, such as γ-type zeolites, ZSM-5 type zeolites and US-γ type zeolites. In an alternative embodiment, the HC trap is platinum supported on alumina.

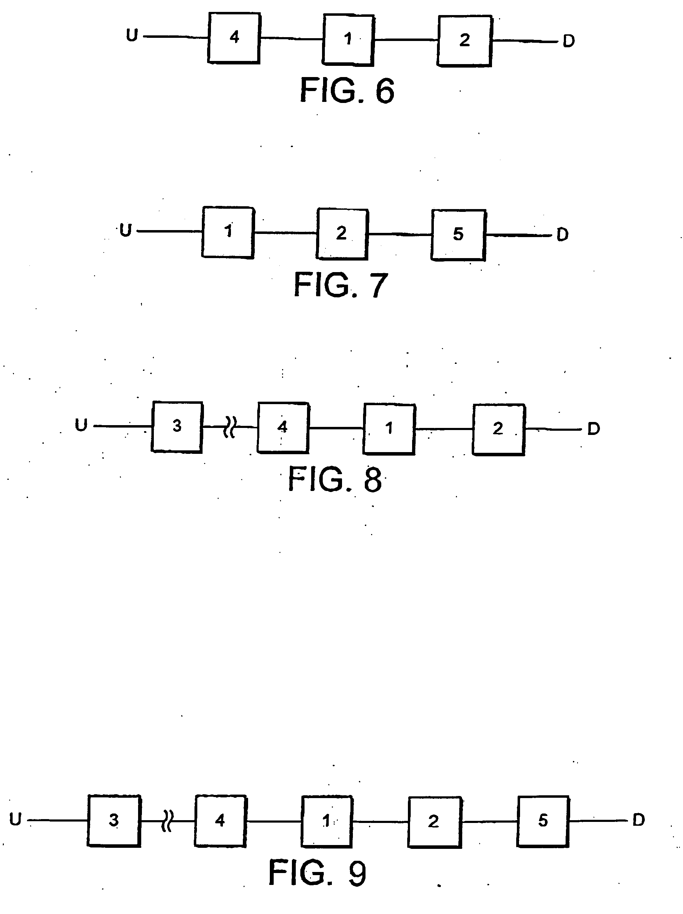

In the embodiment shown in Figure 9, the clean-up catalyst includes an oxygen storage element such as ceria, an oxidation component, such as platinum, a NOx reducing component, for example rhodium, and a component for suppressing H₂S, for example NiO, Fe₂O₃, MnO₂. CoO and CrO₂.

In order that the invention may be more fully understood, the following Example is provided by way of illustration only.

### EXAMPLE

### Apparatus

In a bench test cell, a 4 cylinder, 1.8 litre, 1997 model year, Mitsubishi direct injection engine from a vehicle calibrated for the Japanese market was installed with a direct current dynamometer. The original engine control unit (ECU) was disconnected and control of the engine was by an engine management and control system (EMACS). This was done so that an engine control strategy suitable for use with NOx-trap technology could be applied to the exhaust system for the purposes of our study. In particular, EMACS enabled complete control over ignition and injection timing and duration in both homogenous and lean-burn combustion modes.

The engine was operated from one of two sets of maps: one for the homogeneous mode and the other for the lean mode. Basic maps for ignition and injection timing and duration were generated by firstly logging data from the ECU of a vehicle including the same model of engine as the one used for the bench test and then basing the maps on this information by reverse engineering. In the homogenous mode, the engine was run at a range of engine speeds and loads and a supplementary map to the basic map was generated for the best emissions of NOx, CO and HC emissions under λ = 1 operation. The lean mode was mapped by matching the torque achieved in homogenous mode at the same speed and load demand.

The positioning of the catalyst in the bench test rig was as follows. A palladium/rhodium three-way catalyst, at 93 g ft⁻³ palladium and 7 g ft⁻³ rhodium, on ceramic substrate of 400 cells per square inch ((cpsi) 62 cells cm⁻²) and 0.15 mm wall thickness and volume of 22% engine swept volume (ESV), was fitted in the close-coupled position approximately 30 cm from the engine exhaust manifold. The downstream catalysts were of 133% ESV in total in the same de-mountable can and were fitted 200cm back from the close-coupled catalyst, corresponding to the underfloor position. Sample points for measuring emissions were located before the starter catalyst and after the can housing the underfloor catalysts. Concentrations of NOx, HC, CO₂, CO and O₂ were measured using a dual bank of MEXA (Motor Exhaust Gas Analyser) 9500 gas to allow continuous measurement of both pre-close-coupled catalyst and post-NOx-trap gas concentrations. Thermocouples were fitted in the inlet and outlet cones of both the underfloor and starter catalyst and one thermocouple was placed 25 mm into the underfloor catalyst to give a 1 inch (2.54 cm) bed temperature measurement.

Prior to testing, the engine was thoroughly warmed up in idling condition. In homogenous mode, the engine was then run so that the inlet temperature to the underfloor catalyst was 210°C. It was then switched to lean operation and the exhaust gas re-circulation (EGR) valve position adjusted until the engine-out NOx was 300ppm. The EGR valve position was recorded and is referred to as the lean set-point. The engine was switched back to homogeneous mode, and the EGR valve was closed. A rich set-point was obtained by increasing the fuel injector pulse width to obtain lambda 0.80. A series of lean/rich cycles were run as follows. In the lean mode, the EGR valve was at the lean set-point position until the NOx efficiency of the system had dropped below 75%. The engine was then switched back to homogenous mode for 15 seconds, with injector duration at the rich set-point. The cycles were repeated five times and the results obtained for each of the cycles was logged. This procedure was repeated at other temperatures. Exhaust systems were fitted to the engine and the protocol above was followed and data collected.

The arrangement of the components in the exhaust systems tested is shown in Table 1 below. In all the tests reported the catalysts were in the aged condition. The three-way close coupled catalyst was hydrothermally aged at 1100°C for 4 hours under 10% O₂ and 10% H₂O with a balance of nitrogen. The underfloor catalyst systems were hydrothermally aged at 850°C for 4 hours under 2% O₂, 10% H₂O and a balance of nitrogen.

System 1 consists of upstream Catalyst A, a NOx-trap containing 100 g ft⁻³ (3.53 g 1⁻¹) platinum and 20 g ft⁻³ (0.7 g 1⁻¹) rhodium, coated on ceramic substrate of 400 cpsi (62 cells cm⁻²) and wall thickness 0.15 mm, at 33% ESV. Catalyst B is a NOx-trap at 60 gft⁻³ (2.12 g l⁻¹) platinum and 20 g ft⁻³ (0.7 g l⁻¹) rhodium, coated on ceramic substrate of 600 cpsi (93 cells cm⁻²) and 0.1 mm wall thickness, and 100% ESV. This arrangement is shown schematically in Figure 2 of the accompanying drawings.

System 2 consists of upstream Catalyst A, an advanced lean oxidation catalyst containing 100 gft⁻³ (35.3 g l⁻¹) platinum coated onto an alumina - zeolite mixed material, at 33% ESV, coated on ceramic substrate at 400 cpsi (62 cells cm⁻²) and 0.15 mm wall. Catalyst B is the same NOx-trap formulation described as Catalyst B in System 1. This arrangement is shown schematically in Figure 5 of the accompanying drawings.

**Table 1**

| **System** | **Close-coupled TWC?** | **Catalyst A (Upstream)** | **Catalyst B** |
|---|---|---|---|
| 1 | Yes | NOx-trap | NOx-trap |
| 2 | Yes | Advanced oxidation catalyst | NOx-trap |

### Results

Engine out HC and tailpipe HC are averages from 5 cycles.

### System 1

**Table 2**

| **Inlet temp to underfloor catalyst (°C)** | **Space velocity at U/F catalyst (h**^{**-1**}**)** | **HC engine-out (ppm)** | **HC tailpipe (ppm)** | **HC conversion (%)** | **NOx stored (g)** |
|---|---|---|---|---|---|
| 210 | 37,000 | 1809 | 600 | 67 | 0.11 |
| 291 | 44,000 | 1836 | 268 | 85 | 0.37 |
| 340 | 55,000 | 1800 | 203 | 89 | 0.45 |

### System 2

**Table 3**

| **Inlet temp to underfloor catalyst (°C)** | **Space velocity at U/F catalyst (h**^{**-1**}**)** | **HC engine out (ppm)** | **HC tailpipe (ppm)** | **HC conversion (%)** | **NOx stored (g)** |
|---|---|---|---|---|---|
| 210 | 37,000 | 1808 | 517 | 71 | 0.10 |
| 291 | 44,000 | 1814 | 173 | 91 | 0.42 |
| 340 | 55,000 | 1781 | 153 | 91 | 0.45 |

### Conclusions

System 2, which contains the oxidation catalyst upstream of the NOx-trap, has improved lean hydrocarbon conversions at 210, 291 and 340°C in comparison to the NOx-trap only arrangement of System 1. Improvements of up to 6 % HC conversions are observed at 291°C and the mean improvement is of 2-3%. Improvements in emissions of this order are important to meet European Stage IV legislation. The NOx storage function of System 2 has not deteriorated in comparison to System 1, despite the removal of 33% ESV of NOx storage capacity.

## Claims

1. A lean-burn gasoline engine comprising an exhaust system, which system comprising an oxidation catalyst containing a platinum group metal (PGM), for oxidising engine-derived unburnt hydrocarbon (HC) to H₂O and CO₂ during normal λ > 1 running conditions disposed upstream of a NOx-trap, wherein the only PGM in the oxidation catalyst is platinum.

2. An engine according to claim 1, further comprising a second oxidation catalyst disposed downstream of the NOx trap, optionally comprising a PGM or a mixture of any two or more PGMs.

3. An engine according to claim 1 or 2, wherein the or each oxidation catalyst comprises a HC-trap.

4. An engine according to claim 3, wherein the HC-trap includes a zeolite, optionally β-zeolite, or γ-type zeolite, or ZSM-5 type zeolite or US γ-type zeolite and at least one of alumina, silica-alumina, titania or zirconia.

5. An engine according to any preceding claim, wherein the exhaust system further comprises a three-way catalyst (TWC), preferably in the close-coupled position.

6. An engine according to any of claims 1 to 5, wherein the system further comprises a SOx trap upstream of the NOx-trap.

7. An engine according to any preceding claim, wherein the exhaust system comprises a substrate supporting, each in a distinct zone, the oxidation catalyst and the NOx-trap.

8. An engine according to any preceding claim, wherein it is a gasoline direct injection engine.

9. A vehicle including an engine according to any preceding claim.

10. A method of treating NOx and reducing the amount of engine-derived unburnt HC emitted to the atmosphere from a lean-burn gasoline engine during normal λ > 1 running conditions, which method comprises oxidising the HC to CO₂ and to H₂O by passing lean exhaust gases from the engine containing the HC over an oxidation catalyst containing a PGM and then passing the exhaust gases over a NOx-trap, wherein the only PGM in the oxidation catalyst is platinum.

## Patentansprüche

1. Magerverbrennungs-Otto-Motor, umfassend ein Abgassystem, wobei das System einen Oxidationskatalysator umfasst, der ein Platingruppenmetall (PGM) enthält, zur Oxidation von aus dem Motor stammendem, unverbranntem Kohlenwasserstoff (KW) zu H₂O und CO₂ während normaler λ > 1 Laufbedingungen, vorgeschaltet vor einer NOₓ-Falle vorgesehen, wobei das einzige PGM in dem Oxidationskatalysator Platin ist.

2. Motor nach Anspruch 1, der zusätzlich einen zweiten Oxidationskatalysator umfasst, der nachgeschaltet zu der NOₓ-Falle angeordnet ist, gegebenenfalls ein PGM oder ein Gemisch von beliebigen zwei oder mehreren PGMen umfasst.

3. Motor nach Anspruch 1 oder 2, wobei der oder jeder Oxidationskatalysator eine KW-Falle umfasst.

4. Motor nach Anspruch 3, wobei die KW-Falle ein Zeolith einschließt, gegebenenfalls β-Zeolith oder γ-Typ-Zeolith oder ZSM-5-Typ-Zeolith oder US-γ-Zeolith und mindestens eines von Aluminiumoxid, Siliciumoxid-Aluminiumoxid, Titanoxid oder Zirkoniumoxid.

5. Motor nach einem beliebigen vorstehenden Anspruch, wobei das Abgassystem ferner einen Drei-Weg-Katalysator (TWC) umfasst, vorzugsweise in der close coupled Anordnung.

6. Motor nach einem beliebigen der Ansprüche 1 bis 5, wobei das System ferner eine SOₓ-Falle vorgeschaltet vor der NOₓ-Falle umfasst.

7. Motor nach einem beliebigen vorstehenden Anspruch, wobei das Abgassystem ein Substrat umfasst, das, jeweils in einer verschiedenen Zone, den Oxidationskatalysator und die NOₓ-Falle trägt.

8. Motor nach einem beliebigen vorstehenden Anspruch, der ein direkteinspritzender Otto-Motor ist.

9. Fahrzeug, das einen Motor nach einem beliebigen vorstehenden Anspruch einschließt.

10. Verfahren zur Behandlung von NOₓ und Reduzierung der Menge von aus einem Motor stammenden unverbrannten KW, das in die Atmosphäre emittiert wird, aus einem Magerverbrennungs-Otto-Motor während normaler λ > 1 Laufbedingungen, wobei das Verfahren umfasst ein Oxidieren des KW zu CO₂ und zu H₂O durch Leiten des Magerabgases aus dem Motor, das den KW enthält, über einen Oxidationskatalysator, der ein PGM enthält, und dann ein Leiten des Abgases über eine NOₓ-Falle, wobei das einzige PGM in dem Oxidationskatalysator Platin ist.

## Revendications

1. Moteur à essence à charge stratifiée comprenant un système d'échappement, lequel système comprend un convertisseur catalytique à oxydation contenant un métal du groupe platine (PGM) pour oxyder un hydrocarbure (HC) non brûlé dérivant du moteur en H₂O et CO₂ au cours de conditions de fonctionnement normales λ > 1, disposé en amont d'un collecteur de NOx, dans lequel le seul PGM dans le convertisseur catalytique à oxydation est du platine.

2. Moteur selon la revendication 1, comprenant en outre un second convertisseur catalytique à oxydation disposé en aval du collecteur de NOx, comprenant facultativement un PGM ou un mélange de deux ou plus de deux PGM quelconques.

3. Moteur selon la revendication 1 ou 2, dans lequel le ou chaque convertisseur catalytique à oxydation comprend un collecteur de HC.

4. Moteur selon la revendication 3, dans lequel le collecteur de HC comprend une zéolithe, facultativement une zéolithe de type β ou une zéolithe de type γ ou une zéolithe de type ZSM-5 ou une zéolithe de type US γ et au moins un parmi l'alumine, la silice-alumine, l'oxyde de titane ou la zircone.

5. Moteur selon l'une quelconque des revendications précédentes, dans lequel le système d'échappement comprend en outre un convertisseur catalytique trifonctionnel (TWC), de préférence dans la position monobloc.

6. Moteur selon l'une quelconque des revendications 1 à 5, dans lequel le système comprend en outre un collecteur de SOx en amont du collecteur de NOx.

7. Moteur selon l'une quelconque des revendications précédentes, dans lequel le système d'échappement comprend un substrat supportant, chacun dans une zone distincte, le convertisseur catalytique à oxydation et le collecteur de NOx.

8. Moteur selon l'une quelconque des revendications précédentes, dans lequel il est un moteur à essence à injection directe.

9. Véhicule comprenant un moteur selon l'une quelconque des revendications précédentes.

10. Procédé de traitement de NOx et de réduction de la quantité de HC non brûlé dérivant du moteur émise dans l'atmosphère depuis le moteur à essence à charge stratifiée au cours de conditions de fonctionnement normales λ > 1, lequel procédé comprend l'oxydation du HC en CO₂ et en H₂O en faisant passer des gaz d'échappement pauvres à partir du moteur contenant le HC sur un convertisseur catalytique contenant un PGM et en faisant ensuite passer les gaz d'échappement sur un collecteur de NOx, dans lequel le seul PGM dans le convertisseur catalytique à oxydation est du platine.
